# EUROPEAN PATENT APPLICATION

(11) **EP 4 836 156 A1**
(43) Date of publication of application: **04.11.2026**
(21) Application number: 24910653.5
(22) Date of filing: 06.12.2024
(51) Int. Cl.: H01M 50/375, H01M 50/251, H01M 50/244

(54) **CABINET, ENERGY STORAGE APPARATUS, ENERGY STORAGE SYSTEM AND ELECTRICAL DEVICE**

(30) Priority: 30.12.2023 CN 202323670354 U
(71) Applicant: BYD Company Limited, Shenzhen, Guangdong 518118 (CN)
(72) Inventor: LIANG, Aiting, Shenzhen, Guangdong 518118 (CN); SUI, Jiahai, Shenzhen, Guangdong 518118 (CN); WANG, Rong, Shenzhen, Guangdong 518118 (CN); YUAN, Yuan, Shenzhen, Guangdong 518118 (CN); SHEN, Jian, Shenzhen, Guangdong 518118 (CN)
(74) Representative: Mathys & Squire
(86) International application number: PCT/CN2024/137596
(87) International publication number: WO 2025/139721

(57) **Abstract**

A cabinet (100), an energy storage apparatus (300), an energy storage system (400), and an electrical device, relating to the technical field of energy storage apparatuses (300). The cabinet (100) includes a cabinet body (10), a cabinet door (20) and a pressure relief structure. The cabinet door (20) is connected to the cabinet body (10). The cabinet body (10) and the cabinet door (20) jointly define an accommodating cavity (16). The accommodating cavity (16) is suitable for accommodating a battery (200). The pressure relief structure is arranged on the cabinet door (20) and/or the cabinet body (10). When a thermal management parameter of the accommodating cavity (16) exceeds a first threshold, the pressure relief structure relieves pressure, and when the thermal management parameter of the accommodating cavity (16) exceeds a second threshold, the cabinet door (20) relieves pressure, the first threshold being less than the second threshold. By means of the configuration in which the cabinet (100) includes the cabinet body (10), the cabinet door (20) and the pressure relief structure, the cabinet door (20) is connected to the cabinet body (10), the pressure relief structure is connected to the cabinet door (20) and/or the cabinet body (10), the pressure relief structure relieves pressure when the thermal management parameter of the cabinet body (100) exceeds the first threshold, and the cabinet door (20) relieves pressure when the thermal management parameter exceeds the second threshold greater than the first threshold, the explosion-proof effect can be improved, thereby reducing risks.

## Description

### CROSS-REFERENCE TO RELATED APPLICATIONS

The present disclosure claims priority to Chinese Patent Application No. 202323670354.0 filed with the China National Intellectual Property Administration on December 30, 2023, titled "CABINET, ENERGY STORAGE APPARATUS, ENERGY STORAGE SYSTEM AND ELECTRICAL DEVICE", which is incorporated herein by reference in its entirety.

### FIELD

The present disclosure relates to the field of energy storage apparatuses, specifically to a cabinet, an energy storage apparatus, an energy storage system, and an electrical device.

### BACKGROUND

In recent years, with the rapid development of the new energy industry, energy storage apparatuses have been widely used in the new energy industry. At high temperatures, the reaction speed of fuel gas and oxygen is accelerated to achieve power supply at high temperature. However, at high temperatures, the excessive air pressure in the battery cavity may easily lead to an explosion. Therefore, the energy storage apparatus needs to be equipped with an explosion-proof device on the cabinet to ensure safety.

The explosion-proof device of the existing energy storage apparatus is only a pressure relief structure, and the explosion relief effect is limited.

### SUMMARY

The present disclosure aims to provide a cabinet, an energy storage apparatus, an energy storage system, and an electrical device, which can relieve pressure through a pressure relief structure of the energy storage apparatus and/or a cabinet door to reduce risk.

In order to achieve the purpose of the present disclosure, the present disclosure provides the following technical solutions:

In the first aspect, the present disclosure provides a cabinet, including a cabinet body, a cabinet door and a pressure relief structure. The cabinet door is connected to the cabinet body. The cabinet body and the cabinet door jointly define an accommodating cavity. The accommodating cavity is suitable for accommodating a battery. The pressure relief structure is arranged on the cabinet door and/or the cabinet body. When a thermal management parameter of the accommodating cavity exceeds a first threshold, the pressure relief structure relieves pressure, and when the thermal management parameter of the accommodating cavity exceeds a second threshold, the cabinet door relieves pressure, the first threshold being less than the second threshold.

According to some embodiments of the present disclosure, the cabinet further includes an anti-detachment member. When the cabinet door relieves pressure, the anti-detachment member is adapted to prevent the cabinet door from detaching from the cabinet body, or when the cabinet door relieves pressure and the cabinet door detaches from the cabinet body, the anti-detachment member is adapted to prevent the distance between the cabinet door and the cabinet body from exceeding a target distance.

According to some embodiments of the present disclosure, the anti-detachment member includes a first anti-detachment part, a chain, and a second anti-detachment part. The first anti-detachment part is connected to the cabinet door, the second anti-detachment part is connected to the cabinet body, and both ends of the chain are respectively connected to the first anti-detachment part and the second anti-detachment part.

According to some embodiments of the present disclosure, the cabinet further includes a separation part. The separation part connects the cabinet door and the cabinet body and is configured to disassemble when the thermal management parameter of the accommodating cavity exceeds a second threshold, to ensure at least a portion of the cabinet door has a gap with the cabinet body.

According to some embodiments of the present disclosure, the pressure relief structure includes an explosion-proof valve.

According to some embodiments of the present disclosure, the cabinet further includes a pressure relief window, and the pressure relief window is arranged on the top of the cabinet body.

According to some embodiments of the present disclosure, the cabinet further includes an exhaust member. The exhaust member is arranged on the cabinet door and/or the cabinet body, and the exhaust member is used to realize gas exchange inside and outside the cabinet.

According to some embodiments of the present disclosure, the cabinet further includes a detector. The detector is electrically connected with the exhaust member and is used for detecting thermal management parameters of the accommodating cavity. The exhaust member is configured to be turned on when the thermal management parameter detected by the detector exceeds a third threshold. The third threshold is less than the first threshold.

According to some embodiments of the present disclosure, the thermal management parameter includes at least one of smoke concentration, temperature, and air pressure.

According to some embodiments of the present disclosure, the thermal management parameter includes the air pressure, and the second threshold includes a pressure value F, satisfying: F = F1 * cos α/A, wherein F1 is the bearing pressure when the separation part is disassembled, A is the area of the cabinet door, and α is an included angle between the cabinet door and the cabinet body after the separation part is disassembled, satisfying: 10°≤α≤20°.

In the second aspect, the present disclosure further provides an energy storage apparatus. The energy storage apparatus includes a battery and the cabinet according to any one of the various embodiments of the first aspect. The battery is accommodated in the accommodating cavity.

In the third aspect, the present disclosure further provides an energy storage system. The energy storage system includes a plurality of energy storage apparatuses according to the second aspect.

In the fourth aspect, the present disclosure further provides an electrical device. The electrical device includes an electrical apparatus and the energy storage apparatus according to the second aspect or the energy storage system according to the third aspect. The energy storage apparatus or the energy storage system supplies power to the electrical apparatus.

By means of the configuration in which the cabinet includes the cabinet body, the cabinet door and the pressure relief structure, the cabinet door is connected to the cabinet body, the pressure relief structure is connected to the cabinet door and/or the cabinet body, the pressure relief structure relieves pressure when the thermal management parameter of the cabinet exceeds the first threshold, and the cabinet door relieves pressure when the thermal management parameter exceeds the second threshold greater than the first threshold, the explosion-proof effect can be improved, thereby reducing risks.

### BRIEF DESCRIPTION OF THE DRAWINGS

To more clearly illustrate the technical solutions in the embodiments of the present disclosure or the prior art, the accompanying drawings required for the description of the embodiments or the prior art will be briefly introduced below. It is apparent that the drawings described below are merely some embodiments of the present disclosure, and for a person having ordinary skill in the art, other drawings can be obtained based on these drawings without creative effort.
FIG. 1 is a perspective view of a cabinet according to an embodiment;
FIG. 2 is a schematic side view of a cabinet according to an embodiment;
FIG. 3 is a perspective view of a pressure relief window according to an embodiment;
FIG. 4 is a schematic diagram of an energy storage apparatus according to an embodiment;
FIG. 5 is the first schematic diagram of an energy storage system according to an embodiment;
FIG. 6 is the second schematic diagram of an energy storage system according to an embodiment;

### Reference numerals:

100-cabinet;
10-cabinet body, 11-bottom plate, 12-top plate, 13-first side plate, 14-second side plate, 15-connecting plate, 16-accommodating cavity;
20-cabinet door, 21-door body, 211-exhaust port, 22-window, 23-explosion-proof valve, 24-separation part;
30-detector;
40-first anti-detachment part;
50- second anti-detachment part;
60- chain;
70-pressure relief window;
α-included angle;
200: battery;
300: energy storage apparatus;
400: energy storage system.

### DETAILED DESCRIPTION

Below, the technical solutions in the embodiments of the present disclosure will be clearly and comprehensively described with reference to the accompanying drawings. Obviously, the described embodiments are merely a part of the embodiments of the present disclosure, not all of them. Based on the embodiments of the present disclosure, all other embodiments obtained by person having ordinary skill in the art without creative effort fall within the scope of protection of the present disclosure.

It will be noted that when a component is referred to as "fixed to" another component, it can be directly attached to the other component or there may be a component in between. When a component is considered to be "connected to" another component, it can be directly connected to the other component or there may be a component in between.

Unless otherwise defined, all technical and scientific terms used in this disclosure have the same meaning as commonly understood by person having ordinary skill in the art to which this disclosure belongs. The terms used in the specification of this disclosure are solely for the purpose of describing specific embodiments and are not intended to limit the disclosure. The term "and/or" used in this disclosure includes any and all combinations of one or more related listed items.

Below, some embodiments of the present disclosure will be described in detail with reference to the accompanying drawings. The embodiments described below and the features thereof may be combined with each other without conflict.

An embodiment of the present disclosure provides an electrical device, including an electrical apparatus and an energy storage apparatus according to an embodiment of the present disclosure or an energy storage system according to an embodiment of the present disclosure. The electrical device may be a base station, a household electrical load, etc. The electrical device uses the energy storage apparatus or the energy storage system in the embodiments of the present disclosure to supply power to the electrical apparatus, and the energy storage apparatus or the energy storage system can relieve pressure and reduce the risk.

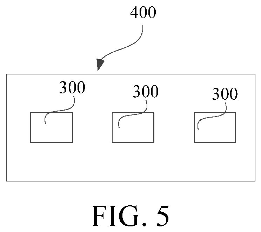

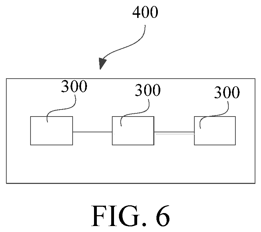

Referring to FIG. 5 and FIG. 6, an embodiment of this disclosure further provides an energy storage system 400, including a plurality of energy storage apparatuses 300 according to some embodiments of this disclosure.

In one embodiment, the plurality of energy storage apparatuses 300 may be independently arranged, and the plurality of energy storage apparatuses 300 are respectively connected to the electrical apparatuses. The plurality of energy storage apparatuses 300 may also be arranged in series, and the plurality of energy storage apparatuses are connected in series to form a path, and are then connected to the electrical apparatus.

The energy storage system is provided, and the energy storage system includes a plurality of energy storage apparatuses 400 according to the embodiments of the present disclosure, to ensure self-pressure can be released, the explosion-proof effect is improved, and the risk is reduced.

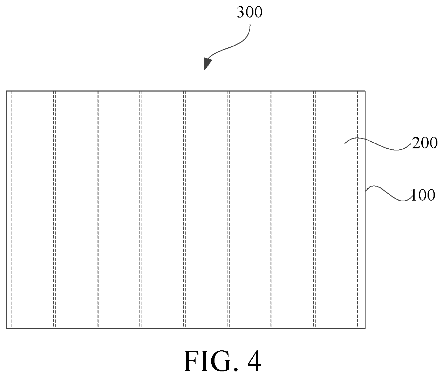

Referring to FIG. 4, an embodiment of this disclosure further provides an energy storage apparatus 300, including a battery 200 and a cabinet 100 according to an embodiment of the present disclosure. The battery according to embodiment of this disclosure may be a square laminated battery, a wound battery, or the like.

In one embodiment, the battery 200 is accommodated in the cabinet 100. There may be one or more batteries 200. When there are a plurality of batteries 200, the plurality of batteries 200 may be connected in series or in parallel, which is not specifically limited.

In the energy storage apparatus 300 according to the embodiment of the present disclosure, by using the cabinet 100 according to the embodiment of the present disclosure, the cabinet door of the cabinet can be used for pressure relief, and the explosion-proof effect can be improved.

The cabinet according to the embodiment of the present disclosure is described in detail below.

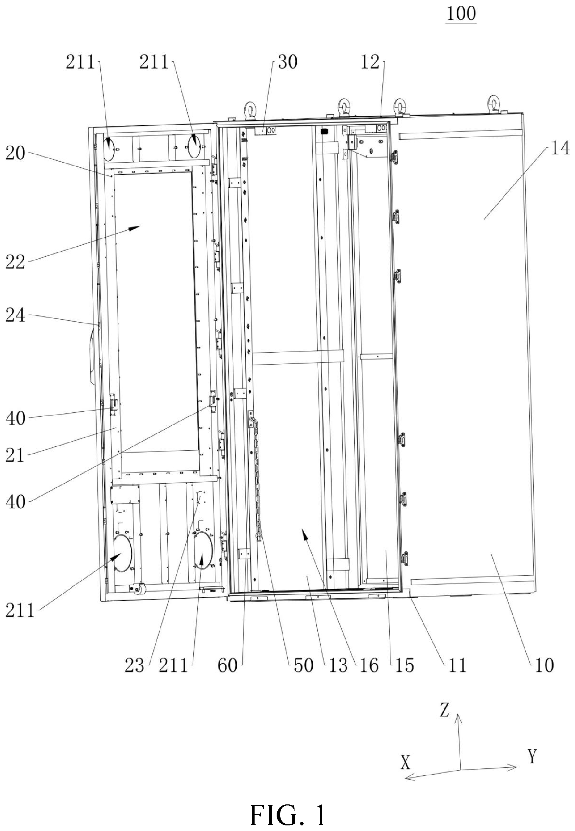

Referring to FIG. 1, an embodiment of the present disclosure provides a cabinet 100, including a cabinet body 10, a cabinet door 20, and a pressure relief structure. The cabinet door 20 is connected to the cabinet body 10. The cabinet body 10 and the cabinet door 20 jointly define an accommodating cavity 16, and the accommodating cavity 16 is suitable for accommodating a battery.

The direction is defined first. Referring to FIG. 1, X is the first direction, Y is the second direction, and Z is the third direction.

In one embodiment, an appearance of the cabinet body 10 may be substantially a cuboid, a cylinder, a cube, or the like, which is not specifically limited.

In one embodiment, as shown in FIG. 1, the cabinet body 10 is a cuboid, the cabinet body 10 includes a bottom plate 11, a top plate 12, a first side plate 13, a second side plate 14, and a connecting plate 15. The connecting plate 15 extends along the third direction Z, the top plate 12 and the bottom plate 11 are respectively connected at both ends of the connecting plate 15 opposite to each other in the third direction Z, and the first side plate 13 and the second side plate 14 are respectively connected at both ends of the connecting plate 15 opposite to each other in the first direction X.

In one embodiment, the bottom plate 11, the top plate 12, the first side plate 13, the second side plate 14, and the connecting plate 15 enclose to form an accommodating cavity 16, an end of the accommodating cavity 16 opposite to the connecting plate 15 is open, and the battery is accommodated in the accommodating cavity 16.

In one embodiment, the cabinet body 10 is made of a material having relatively high structural strength, specifically a metal material, a high-strength plastic, a ceramic, or the like. Metal materials such as aluminum, aluminum alloy, magnesium alloy, iron, iron alloy, etc. The cabinet body 10 may be an integrated structure, that is, the bottom plate 11, the top plate 12, the first side plate 13, the second side plate 14, and the connecting plate 15 are an integrated structure manufactured by an integrated molding process, and the integrated molding process may be stamping, casting, or the like, which is not limited.

In one embodiment, the cabinet body 10 may also have a split structure, and the bottom plate 11, the top plate 12, the first side plate 13, the second side plate 14, and the connecting plate 15 may be connected and fixed by welding, bonding, clamping, screwing, etc. The wall thickness of each of the cabinet body 10 may be substantially uniform, that is, the thickness of each plate body may be substantially uniform, and the thickness of the bottom plate 11, the top plate 12, the first side plate 13, the second side plate 14, and the connecting plate 15 may also be substantially the same.

In one embodiment, the cabinet door 20 is connected to an opening of the accommodating cavity 16. When the cabinet door 20 is closed, the cabinet door 20 is opposite to the connecting plate 15 and closes the opening of the accommodating cavity 16.

In one embodiment, a connection mode between the cabinet door 20 and the cabinet body 10 may be a sliding connection, a rotational connection, a clamping connection, or the like, which is not specifically limited.

In one embodiment, the pressure relief structure is arranged on the cabinet door 20 and/or the cabinet body 10.

In one embodiment, the cabinet door 20 includes a door body 21. The pressure relief structure is connected to the door body 21, and the connection mode may be welding, adhesion, clamping, screwing, etc., which is not limited.

In one embodiment, when a thermal management parameter of the accommodating cavity 16 exceeds a first threshold, the pressure relief structure relieves pressure, and when the thermal management parameter of the accommodating cavity 16 exceeds a second threshold, the cabinet door relieves pressure, the first threshold being less than the second threshold.

At high temperature, reaction speed of fuel gas and oxygen is accelerated, so as to achieve power supply at a high temperature. However, due to excessive air pressure inside the battery at an elevated temperature, an explosion is prone to occurring. The explosion limit of the battery is related to temperature and pressure: there is an explosive mixture at a hydrogen concentration of about 4 to 75 volume% hydrogen (at room temperature and atmospheric pressure) in the case of air mixing with hydrogen. Because the fuel cell system has a compact structure, in order to minimize the risk, a series of safety precautions are taken in the case of prior art fuel cell systems, primarily primary and secondary explosion-proof measures. The primary explosion-proof measure generally prevents the formation of an exploitable atmosphere or at least reduces the risk of formation thereof, and the secondary explosion-proof measure is generally to prevent ignition of an explosive atmosphere, that is, to avoid an effective ignition source.

In existing energy storage apparatuses, a side wall of the cabinet 100 is provided with a vent hole, a piston slider device is arranged in the vent hole, and when the piston slider slides in the vent hole, an adjustable inner cavity is formed between the cavity located close to the shell of the piston slider and an inner wall surface of the side plate. When the piston slider escapes from the vent hole, the accommodating cavity is communicated with the external space through the sleeve to vent the explosion. However, the channel formed by vent hole is small, the adjustment effect is limited. Under the action of a certain blasting force, the piston slider device is caused to be ejected, which causes harm to surrounding equipment and people.

The cabinet 100 according to the embodiment of the present disclosure includes a cabinet body 10, a cabinet door 20, and a pressure relief structure. The cabinet door 20 is connected to the cabinet body 10. The pressure relief structure is connected to the cabinet door 20 and/or the cabinet body 10. When the thermal management parameter in the cabinet 100 exceeds a first threshold, the pressure relief structure relieves pressure, and when the thermal management parameter exceeds a second threshold greater than the first threshold, the cabinet door relieves pressure, thereby improving the explosion-proof effect and reducing the risk.

In one embodiment, the cabinet is provided with an exhaust port 211, and the exhaust port 211 is used for discharging gas.

In one embodiment, an exhaust port 211 is arranged on the door body 21, or an exhaust port 211 is arranged on the cabinet body 10, which is not specifically limited. In one embodiment, an exhaust port 211 is arranged on the door body 21.The door body 21 is made of a material having a higher structural strength, and specifically a metal material, a high-strength plastic, a ceramic, etc. Metal materials such as aluminum, aluminum alloy, magnesium alloy, iron, iron alloy, etc.

In one embodiment, the exhaust port 211 may be square, circular, polygonal, etc. and the exhaust port 211 may be one or more, which is not specifically limited.

For example, as shown in FIG. 1, the exhaust port 211 is circular.

By providing the exhaust port 211, combustible gas can be exhausted through the exhaust port 211 when the parameters in the cabinet body 10 reach a preset value, thereby preventing formation of an explosive atmosphere or at least reducing the risk of formation.

In one embodiment, the cabinet door 20 further includes a pressing plate (not shown in the figure), the door body 21 is provided with a window 22, and the pressing plate is connected to the door body 21 and closes the window 22.

In one embodiment, the shape of the window 22 is not limited, and may be circular, square, polygonal, etc. The shape of the pressing plate is similar to the shape of the window 22, the pressing plate can close the window 22, and the size is not limited.

For example, as shown in FIG. 1, the window 22 is rectangular, and the shape and size of the pressing plate are the same as those of the window 22.

In one embodiment, the pressing plate and the door body 21 are detachably connected. The pressure plate may be made of transparent glass, or a material having a higher structural strength, and specifically a metal material, a high-strength plastic, a ceramic, etc. Metal materials such as aluminum, aluminum alloy, magnesium alloy, iron, iron alloy, etc. The pressure plate and the door body 21 may be connected by welding, bonding, or clamping, without limitation.

In one embodiment, there are a plurality of exhaust ports 211, and the plurality of exhaust ports 211 are arranged in the door body 21 at intervals.

In one embodiment, the number of exhaust ports 211 may be 2, 3, 4, or the like, and the number of exhaust members may correspond to the exhaust ports 211, and there is no limitation.

In one embodiment, the plurality of exhaust ports 211 are spaced around the window 22 at intervals. For example, as shown in FIG. 1, there are four exhaust ports 211, and the four exhaust ports 211 are respectively arranged at four corners of the door body 21. The plurality of exhaust ports 211 may also be spaced apart on two opposite sides of the window 22, which is not specifically limited.

By providing a plurality of exhaust ports 211, the plurality of exhaust ports 211 are arranged on the door body 21 at intervals, to ensure combustible gas can be discharged uniformly and quickly. The formation of an explosive atmosphere can be prevented, and the risk of explosion caused by excessive local air pressure is also reduced.

In one embodiment, the cabinet 100 further includes an exhaust member (not shown in the figure), and the exhaust member is provided on the cabinet door 20 and/or the cabinet body 10.

In one embodiment, an exhaust member is provided at the exhaust port 211 arranged on the cabinet door 20. The exhaust member is used to accelerate the gas to be discharged to the outside through the exhaust port 211, so as to realize the gas exchange between the inside and outside of the cabinet 100 .

In one embodiment, the exhaust member may be a common exhaust member in the art, such as a fan, an exhaust blower, etc., without limitation.

In one embodiment, the exhaust member is connected and fixed to the inner wall surface of the exhaust port 211, or the exhaust member is connected and fixed to the side facing the connecting plate 15 when the door body 21 is closed, or the exhaust member is connected and fixed to the side facing away from the connecting plate 15 when the door body 21 is closed, and the connection method may be welding, clamping, bonding, screwing, etc., and any of the above methods are acceptable, and there is no specific limitation.

In one embodiment, the exhaust member is used for accelerating the gas out of the exhaust port 211 to the outside. When the parameter in the cabinet body 10 reaches a preset value, the exhaust member starts to work by means of the discharge port 211 so as to discharge the combustible gas in the cabinet body 10.

By providing an exhaust member, the exhaust member being accommodated in the exhaust port 211, the exhaust member can accelerate the flow of gas to accelerate the discharge of the combustible gas in the cabinet body 10 when the parameter in the cabinet body 10 reaches a preset value, and prevent the formation of an explosive atmosphere or at least reduce the risk of its formation.

In one embodiment, the cabinet 100 further includes a detector 30, and the detector 30 is electrically connected to the exhaust member. The detector 30 is configured to detect a thermal management parameter in the cabinet 100, and the exhaust member is configured to be turned on when the thermal management parameter detected by the detector 30 exceeds a third threshold, the third threshold being less than the first threshold.

In one embodiment, the thermal management parameter is at least one of smoke concentration, temperature, and air pressure.

In one embodiment, the first threshold, the second threshold, and the third threshold may be any one of smoke concentration, temperature, and air pressure, or may be a plurality of parameters in the foregoing parameters, which is not specifically limited.

In one embodiment, there may be one or more detectors, and where there are a plurality of detectors, the smoke concentration, and/or the temperature, and/or the air pressure parameter in the accommodating cavity 16 may be respectively detected, which is not specifically limited.

By setting the thermal management parameter as at least one of smoke concentration, temperature, and air pressure, the internal situation of the cabinet 100 can be detected from the multi-dimensional degree, so as to find an abnormal situation as soon as possible, thereby preventing the formation of an explosive atmosphere or at least reducing the risk of its formation.

In one embodiment, the thermal management parameters are smoke concentration and/or temperature parameters. The detector 30 is used to detect smoke and/or temperature parameters in the cabinet 100, and the exhaust member is used to be turned on according to the smoke and/or temperature parameters detected by the detector 30 when the smoke and/or temperature parameters exceed the third threshold.

In one embodiment, the exhaust member operates when the thermal management parameter of the accommodating cavity 16 exceeds a third threshold. When the thermal management parameter does not exceed the third threshold, the exhaust member is closed, and when the thermal management parameter of the accommodating cavity 16 falls below the third threshold value after the exhaust member is operated for a period of time, the exhaust member stops working.

In one embodiment, the detector 30 may be a smoke and/or temperature sensing fire detector 30 commonly used in the art. The number of detectors 30 may be one or more, which is not particularly limited.

In one embodiment, the detector 30 may be connected to the cabinet body 10 or the cabinet door 20, and the connection mode may be welding, bonding, clamping, screwing, etc., which is not limited.

For example, as shown in FIG. 1, the detector 30 is connected to a surface of the first side plate 13 facing the second side plate 14.

In one embodiment, the detector 30 is electrically connected to the exhaust member. The connection mode of the detector 30 and the exhaust member may be a direct connection, and the exhaust member is used to be turned on or off according to the smoke and/or temperature parameters detected by the detector 30. Alternatively, the connection mode of the detector 30 and the exhaust member may be an indirect connection. For example, the cabinet 100 further includes a control member (not shown in the figure), and the control member is electrically connected to the detector 30 and the exhaust member, respectively. The smoke and/or temperature parameters detected by the detector 30 are transmitted to the control member, and the control member controls the opening or closing of the exhaust member. All of the above methods are possible and are not specifically limited.

By further providing the cabinet 100 with a detector 30, the detector 30 is electrically connected to the exhaust member. The detector 30 is used for detecting thermal management parameters in the cabinet 100, and the exhaust member is used to be turned on according to the thermal management parameters detected by the detector 30 when the thermal management parameters exceed a third threshold value. The third threshold value is less than the first threshold value, to ensure combustible gas can be discharged in time and the risk of formation of an explosive atmosphere can be reduced.

In one embodiment, the pressure relief structure further includes an explosion-proof valve 23.

In one embodiment, the explosion-proof valve 23 is arranged on the door 21, or the explosion-proof valve 23 is arranged on the cabinet body 10, which is not specifically limited.

The root cause of thermal runaway of the battery cell is that the exothermic side reaction inside the battery cell leads to heat accumulation. The external heat exchange rate of the battery cell is less than the heat accumulation rate, and the temperature continues to rise until it reaches the ignition point temperature, causing combustion and explosion.

In order to prevent the occurrence of thermal runaway accidents and avoid the imbalance of internal and external pressures in confined spaces, and considering that when lithium batteries catch fire, a large amount of toxic gases are generated instantly, it is necessary to relieve the pressure and discharge the gases in a timely and directional manner. As a passive safety protection measure to prevent thermal runaway in energy storage apparatuses, explosion-proof valve 23 can meet the above requirements of maintaining pressure balance and gas directional release.

In one embodiment, the thermal management parameter includes a pressure parameter. The explosion-proof valve 23 is opened when the pressure parameter in the accommodating cavity 16 reaches a first threshold value, and the first threshold value is greater than the pressure parameter in the normal environment inside the cabinet 100.

In one embodiment, the explosion-proof valve 23 may be an explosion-proof valve 23 commonly used in the art, such as a piston spring type explosion-proof valve 23, a thimble type explosion-proof valve 23, etc., and the connection mode between the explosion-proof valve 23 and the door body 21 may be welding, bonding, clamping, screwing, etc., and is not limited in detail. By setting the explosion-proof valve 23, when an explosive atmosphere is formed, the pressure in the cabinet 100 increases after the explosion occurs, and when the pressure reaches the first pressure value of the opening pressure of the explosion-proof valve 23, the explosion-proof valve 23 is opened to unload the explosion and release the pressure in time.

In one embodiment, the cabinet 100 further includes a separation part 24 that connects the cabinet door 20 and the cabinet body 10, and is configured to disassemble when the thermal management parameter in the accommodating cavity 16 exceeds the second threshold, to ensure at least a portion of the cabinet door 20 has a gap with the cabinet body 10.

In one embodiment, the separation part 24 is connected to the door body 21 of the cabinet door 20. The separation part 24 and the door body 21 may have an integral structure or a split structure, and the separation part 24 and the door body 21 may be connected and fixed by welding, clamping, screwing, or the like, which is not limited in detail.

In one embodiment, when the explosion pressure in the cabinet 100 reaches the second threshold of the passive opening pressure of the cabinet door 20, the separation part 24 is deformed or disassembled to ensure at least a portion of the door body 21 and the cabinet body 10 have a gap.

In one embodiment, the separation part 24 is a door lock hinge. When the pressure value of the ignition and explosion reaches the passive opening pressure of the cabinet door 20, the door lock hinge is disconnected to ensure at least a portion of the door body 21 is disconnected from the cabinet body 10, and the cabinet door 20 is passively opened to achieve an instantaneous explosion relief effect.

In one embodiment, the situation when the battery explodes is simulated by explicit dynamic simulation, and the weak surface is controlled to be located at the door lock hinge, so as to ensure that the door lock hinge is disconnected first when the explosion pressure in the cabinet 100 reaches the second pressure value of the passive opening pressure of the cabinet door 20.

By setting the cabinet door 20 to include a separation part 24, the separation part 24 connects the door body 21 and the cabinet body 10. Under normal circumstances, the cabinet door 20 can be opened and protected normally. When an explosion occurs, the separation part 24 disassembles to ensure there is a gap between at least portion of the door body 21 and the cabinet body 10. When the pressure value of the explosion reaches the passive opening pressure of the cabinet door 20, the cabinet door 20 can be passively opened, and the pressure relief area is large, which can achieve the effect of instantaneous explosion relief to protect the cabinet body 10.

Moreover, by installing double passive explosion-proof devices for double protection, the safety is higher. When the passive explosion-proof valve 23 fails or cannot relieve the pressure in time, the cabinet door 20 can be passively opened to relieve the pressure, and the energy storage system can still safely release the explosion.

In one embodiment, the thermal management parameter includes air pressure, and the second threshold includes a pressure value F, which satisfies: F = F1 * cos α/A.

Here, F1 is the bearing pressure when the separation part 24 is disassembled, A is the area of the door body 21, and α is an included angle between the door body 21 and the cabinet body 10 after the separation part 24 is disassembled.

Alternatively, the bearing pressure F1 at the time of disassembly of the separating portion 24 may be determined by simulation analysis.

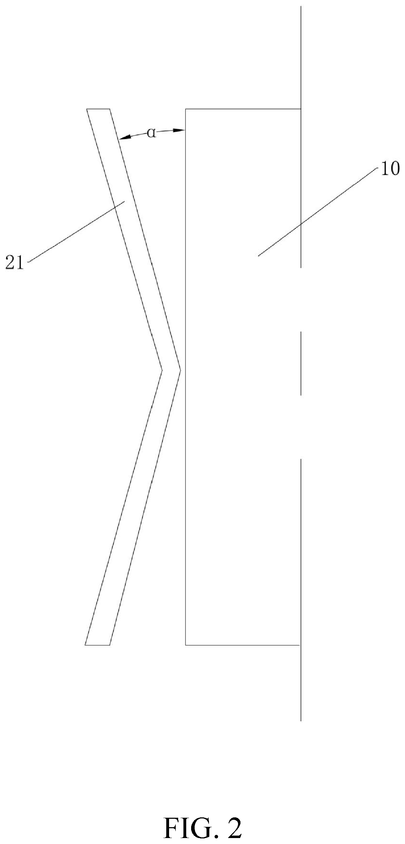

In one embodiment, the included angle α satisfies: 10°≤α≤20°. In a normal state, the door body 21 is in close contact with the cabinet body 10. After the separation part 24 is disassembled, as shown in FIG. 2, the door body 21 is bent at a certain angle due to the explosion impact of the door body 21, but does not completely separate. Therefore, an included angle α is formed between the separation part 24 and the cabinet body 10.

Alternatively, the value of α may be 12°, 15°, 18°, etc., which is not particularly limited.

By setting the second threshold value to include the pressure value F, which satisfies: F = F1 * cos α/A, when the pressure value F of the ignition and explosion reaches the passive opening pressure of the cabinet door 20, the cabinet door 20 can be passively opened, the pressure relief area is large, and the effect of instantaneous explosion relief to protect the cabinet body 10 can be achieved.

In one embodiment, the cabinet 100 further includes an anti-detachment member. When the cabinet door 20 relieves pressure, the anti-detachment member is adapted to prevent the cabinet door 20 from detaching from the cabinet body 10, or when the cabinet door 20 relieves pressure and the cabinet door 20 detaches from the cabinet body 10, the anti-detachment member is adapted to prevent the distance between the cabinet door 20 and the cabinet body 10 from exceeding a target distance.

In one embodiment, when the cabinet door 20 is passively opened for explosion venting, the cabinet door 20 is forced open and may be ejected away from the cabinet body 10 due to the high pressure inside the cabinet 100. Therefore, an anti-detachment member is arranged between the cabinet door 20 and the cabinet body 10. When the cabinet door 20 is forced open, an anti-detachment member applies a pulling force to the cabinet door 20 towards the cabinet body 10, which can play a certain buffering role when the cabinet door 20 is passively forced open, preventing the cabinet door 20 from ejecting and causing damage to the external environment or pedestrians.

In one embodiment, the anti-detachment member includes a first anti-detachment part 40, a second anti-detachment part 60 and a chain 50. The first anti-detachment part 40 is connected to the cabinet door 20, the second anti-detachment part 60 is connected to the cabinet body 10, and both ends of the chain 50 are respectively connected to the first anti-detachment part 40 and the second anti-detachment part 60.

In one embodiment, the first anti-detachment part 40 is connected to the door body 21, and the connection mode between the first anti-detachment part 40 and the door body 21 may be welding, bonding, clamping, screwing, or the like, which is not specifically limited.

Similarly, the connection mode between the second anti-detachment part 60 and the cabinet body 10 may be welding, bonding, clamping, screwing, or the like, which is not specifically limited.

In one embodiment, both ends of the chain 50 are respectively connected with the first anti-detachment part 40 and the second anti-detachment part 60 so as to prevent the door body 21 from ejecting when the door body 21 is passively opened for explosion venting. The specific shapes of the first anti-detachment part 40 and the second anti-detachment part 60 are not limited, and may be a block shape, a column shape, or the like. One of the first anti-detachment part 40 and the second anti-detachment part 60 is always fixed to one end of the chain 50, and the other is connected to the other end of the chain 50 at the time of attachment.

For example, the first anti-detachment part 40 is a hook of the chain 50, one end of the chain 50 is first connected and fixed to the second anti-detachment part 60, and at the time of attachment, the end of the chain 50 away from the second anti-detachment part 60 is connected to the first anti-detachment part 40. Alternatively, the second anti-detachment part 60 is a hook of the chain 50, one end of the chain 50 is always connected and fixed to the first anti-detachment part 40, and the end of the chain 50 away from the first anti-detachment part 40 is connected to the second anti-detachment part 60 at the time of attachment.

In one embodiment, the number of chains 50 may be one or more, such as 2, 3, 4, etc. The number of the first anti-detachment part 40 and the number of the second anti-detachment part 60 can correspond to the number of the chain 50, which is not specifically limited.

For example, as shown in FIG. 1, there are two chains 50, two first anti-detachment parts 40, and two second anti-detachment parts 60. The two second anti-detachment parts 60 are connected to the first side plate 13 and the second side plate 14 of the cabinet body 10, respectively. FIG. 1 shows an open state of the cabinet door 20. When the cabinet door 20 is closed, the two first anti-detachment parts 40 are respectively located on both sides of the door body 21 along the first direction X, and one end of the two chains 50 is respectively connected to the two second anti-detachment parts 60. At the time of installation, an end of the chain 50 away from the second anti-detachment parts 60 is connected and fixed to the first anti-detachment parts 40 to complete the installation.

By providing the first anti-detachment part 40 and the second anti-detachment part 60, the first anti-detachment part 40 is connected to the door body 21, the second anti-detachment part 60 is connected to the cabinet body 10, and the first anti-detachment part 40 and the second anti-detachment part 60 are matched and connected. When the cabinet door 20 is passively opened for explosion venting, the door body 21 can be prevented from ejecting into the surrounding devices and people, thereby reducing the risk.

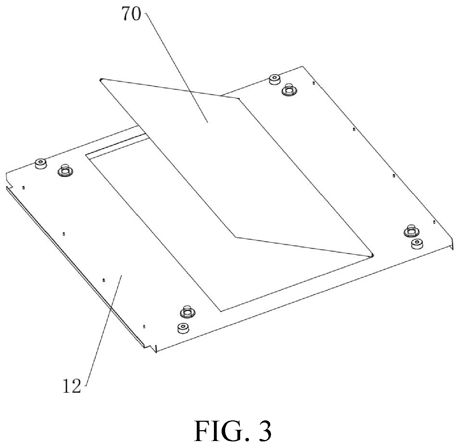

In one embodiment, as shown in FIG. 3, the cabinet 100 further includes a pressure relief window 70, the pressure relief window 70 is arranged on the top of the cabinet body 10, and the pressure relief window 70 is used for pressure relief.

In one embodiment, the pressure relief window 70 is arranged on the top plate 12 of the cabinet body 10.

In one embodiment, the pressure relief window 70 may be a pressure relief window 70 commonly used in the art. After the explosion occurs, the pressure relief window 70 is actively and/or passively opened to perform synchronous pressure relief, which can increase the explosion relief speed and protect the cabinet body 10.

In one embodiment, the structure of the pressure relief window 70 may also be similar to the structure of the aforementioned cabinet door 20. The pressure relief window 70 includes a window body and a pressure relief structure. Please refer to the above and there is no specific limitation.

By providing the cabinet 100 to further include a pressure relief window 70, the pressure relief window 70 is arranged on the top of the cabinet body 10, and the pressure relief window 70 is used for pressure relief, to ensure the explosion-proof effect can be improved and the risk can be reduced.

The explosion-proof procedure of the cabinet 100 in the embodiment of the present disclosure will be described below.

First, the cabinet 100 in the embodiment of the present disclosure includes an active explosion-proof system. When the battery or the internal conditions of the cabinet body 10 are abnormal, the active explosion-proof system is activated first. The active explosion-proof system is composed of a detector 30 and an exhaust system. The detector 30 is used to detect smoke and/or temperature parameters in the cabinet body 10. The exhaust system includes an exhaust port 211 and an exhaust member. The exhaust member is used to be turned on when the smoke and/or temperature parameters detected by the detector 30 exceed a preset value, and discharge the combustible gas in the cabinet body 10 through the exhaust port 211, thereby reducing the risk of the formation of an explosive atmosphere.

If the explosive atmosphere is still formed, after the explosion occurs, the pressure inside the cabinet body 10 increases, and the passive explosion-proof system is passively turned on to unload the explosion. The passive explosion protection system includes the passive explosion-proof valve 23 and the cabinet door 20 itself. Since the cabinet door 20 itself has certain strength requirements to meet transportation, earthquake and other working conditions, the passive explosion-proof valve 23 is activated first, and the cabinet door 20 is used as the last explosion-proof device. After the explosion occurs, when the pressure in the cabinet body 10 reaches the opening pressure of the passive explosion-proof valve 23, the passive explosion-proof valve 23 is opened, and the release of the explosion begins.

In extreme cases, the explosion is still uncontrollable by the active explosion protection system and the passive explosion protection valve 23. When the pressure in the cabinet body 10 reaches the passive opening pressure of the cabinet door 20, the door lock hinge is disconnected, and the cabinet door 20 is passively opened to rapidly vent the explosion.

In the description of the embodiments of the present disclosure, it will be noted that the orientation or positional relationship of the terms "center", "upper", "lower", "left", "right", "vertical", "horizontal", "inner", "outer" and other indicators is based on the orientation or positional relationship described in the accompanying drawings, and is only for the convenience of describing the present disclosure and simplifying the description, rather than indicating or implying that the device or element referred to must have a specific orientation, be constructed and operated in a specific orientation, and therefore will not be understood as a limitation to the present disclosure.

The above disclosure is only a preferred embodiment of the present disclosure and cannot be used to limit the scope of the present disclosure. Person having ordinary skill in the art will understand that all or part of the processes of the foregoing embodiments are implemented, and equivalent changes made according to the claims of the present disclosure are still within the scope of the present disclosure.

## Claims

1. A cabinet, comprising:
a cabinet body (10);
a cabinet door (20), being connected to the cabinet body (10), the cabinet body (10) and the cabinet door (20) jointly defining an accommodating cavity (16), the accommodating cavity (16) being suitable for accommodating a battery (200);
a pressure relief structure, being arranged on the cabinet door (20) and/or the cabinet body (10);
when a thermal management parameter of the accommodating cavity (16) exceeds a first threshold, the pressure relief structure relieving pressure, and when the thermal management parameter of the accommodating cavity (16) exceeds a second threshold, the cabinet door (20) relieving pressure, the first threshold being less than the second threshold.

2. The cabinet according to claim 1, wherein the cabinet further comprises an anti-detachment member, when the cabinet door relieves pressure, the anti-detachment member being adapted to prevent the cabinet door (20) from detaching from the cabinet body (10), or when the cabinet door relieves pressure and the cabinet door (20) detaches from the cabinet body (10), the anti-detachment member being adapted to prevent the distance between the cabinet door (20) and the cabinet body (10) from exceeding a target distance.

3. The cabinet according to claim 2, wherein the anti-detachment member comprises a first anti-detachment part (40), a chain (50) and a second anti-detachment part (60), the first anti-detachment part (40) being connected to the cabinet door (20), the second anti-detachment part (60) being connected to the cabinet body (10), and both ends of the chain (50) being respectively connected to the first anti-detachment part (40) and the second anti-detachment part (60).

4. The cabinet according to any one of claims 1 to 3, wherein the cabinet further comprises a separation part (24), the separation part (24) connecting the cabinet door (20) and the cabinet body (10), and being adapted to disassemble when the thermal management parameter of the accommodating cavity (16) exceeds the second threshold, to ensure at least a portion of the cabinet door (20) has a gap with the cabinet body (10).

5. The cabinet according to any one of claims 1 to 3, wherein the pressure relief structure comprises an explosion-proof valve.

6. The cabinet according to any one of claims 1 to 3, wherein the cabinet further comprises a pressure relief window (70), being arranged on the top of the cabinet body (10).

7. The cabinet according to any one of claims 1 to 3, wherein the cabinet further comprises an exhaust member, the exhaust member being arranged on the cabinet door (20) and/or the cabinet body (10), and the exhaust member being used to realize gas exchange between the inside and the outside of the cabinet.

8. The cabinet according to claim 7, wherein the cabinet further comprises a detector, the detector being electrically connected to the exhaust member and being adapted to detect the thermal management parameter of the accommodating cavity (16); the exhaust member being configured to be turned on when the thermal management parameter detected by the detector exceeds a third threshold, the third threshold being less than the first threshold.

9. The cabinet according to claim 4, wherein the thermal management parameter comprises at least one of smoke concentration, temperature, and air pressure.

10. The cabinet according to claim 9, wherein the thermal management parameter comprises the air pressure and the second threshold comprises a pressure value F, satisfying: $F = F 1 * cos α / A ,$ wherein F1 is the bearing pressure when the separation part is disassembled, A is the area of the cabinet door, and α is an included angle between the cabinet door and the cabinet body after the separation part is disassembled, satisfying: 10°≤α≤20°.

11. An energy storage apparatus, comprising a battery and the cabinet according to any one of claims 1 to 10, wherein the battery is accommodated in the accommodating cavity.

12. An energy storage system, comprising a plurality of energy storage apparatuses according to claim 11, the plurality of energy storage apparatuses being electrically connected.

13. An electrical device, comprising an electrical apparatus and the energy storage apparatus according to claim 11 or the energy storage system according to claim 12, wherein the energy storage apparatus or the energy storage system supplies power to the electrical apparatus.
